# EUROPÄISCHE PATENTANMELDUNG

(11) **EP 3 144 657 A1**
(43) Veröffentlichungstag der Anmeldung: **22.03.2017**
(21) Anmeldenummer: 16001987.3
(22) Anmeldetag: 13.09.2016
(51) Int. Cl.: G01M 5/00, G01B 21/32, G01M 13/00, G01M 17/08, G01N 3/20

(54) **SCHIENENFAHRZEUG MIT WENIGSTENS EINEM ELASTISCH VERFORMBAREN BAUTEIL UND VERFAHREN ZUR FESTSTELLUNG DES BEGINNS EINER VERSCHLEISSBEDINGTEN BAUTEIL-RESTNUTZUNGSDAUER AN EINEM SCHIENENFAHRZEUG**

(30) Priorität: 15.09.2015 DE 102015011762
(71) Anmelder: Jörn GmbH, 71336 Waiblingen (DE)
(72) Erfinder: Reinke, Kai, 71686 Remseck (DE)
(74) Vertreter: Liebl, Thomas

(57) **Zusammenfassung**

Schienenfahrzeug mit wenigstens einem elastisch verformbaren Bauteil als Strukturteil und/oder Lagerteil, auf das im Betriebsverlauf von wechselnden Fahrzuständen abhängige, unterschiedliche Verformungskräfte einwirken, die zu einem die Bauteilnutzungsdauer begrenzenden Bauteilverschleiß führen. Ein sich zeitversetzt wiederholender, jeweils gleicher Fahrzustand wird vorbestimmt, dem eine bestimmte, jeweils gleiche Verformungskraft zugeordnet ist. Bei Erkennung eines solchen vorbestimmten Fahrzustands wird selbsttätig ein Messvorgang durch ein Startsignal gestartet und durchgeführt, wobei eine Bauteilverformung als Kenngröße für eine aktuelle Bauteilsteifigkeit gemessen wird. Dann wird ein Vergleich eines aktuellen Verformungsmesswerts bezüglich vorhergehender, gespeicherter Verformungsmesswerte durchgeführt, wodurch der Beginn einer verschleißbedingen vorgebbaren Bauteil-Restnutzungsdauer festgestellt und eine entsprechende Warninformation ausgegeben wird.

## Beschreibung

Die Erfindung betrifft ein Schienenfahrzeug mit wenigstens einem elastisch verformbaren Bauteil als Strukturteil und/oder Lagerteil nach dem Oberbegriff des Anspruchs 1 sowie ein Verfahren zur Feststellung des Beginns einer verschleißbedingten Bauteil-Restnutzungsdauer nach dem Oberbegriff des Anspruchs 11.

Der Schienenverkehr wird mit unterschiedlichen Zügen, insbesondere mit Personenzügen und Güterzügen betrieben, die meist auf derselben Strecke mit festgelegten Geschwindigkeiten verkehren. Obwohl die meisten eingesetzten Züge, insbesondere Hochgeschwindigkeitszüge wie ICE's einen hohen technischen Entwicklungsstand aufweisen, ist deren sicherer Betrieb bei möglichst geringen Betriebs- und Wartungskosten eine ständige Herausforderung. Ein Problem ist dabei die Abschätzung der Nutzungsdauer von elastisch verformbaren Bauteilen.

Unter "Schienenfahrzeug" werden hier alle möglichen auf festgelegten Strecken regelmäßig verkehrende Personenzüge und Güterzüge mit ihren Lokomotiven und Waggons verstanden, bei denen auf elastisch verformbare Bauteil als Strukturteile und/oder Lagerteile im Betrieb abhängig von wechselnden Fahrzuständen unterschiedliche Verformungskräfte einwirken, die letztendlich zu einem die Bauteilnutzungsdauer begrenzenden Bauteilverschleiß führen. Solche elastisch verformbaren Bauteile sind insbesondere Gummi-Metalllager als Lagerteile einer Lokomotive oder eines Waggons wie beispielsweise ein Lagerteil in einem Drehgestell als Wankstütze und/oder Lenkerlager und/oder Primär- und Sekundärfeder. Weiter sind dies Strukturteile aus Kunststoff, insbesondere aus Faserverbundwerkstoffen.

Auch der weiter verwendete Begriff "Gummi-Metall-Lager" ist, wie in Fachkreisen üblich, allgemein zu verstehen und weit auszulegen, wobei "Gummi" als Synonym für "Elastomermaterial" und "Metall" für ein verformungssteifes Lagerbauteil steht, das insbesondere auch aus Kunststoff bestehen kann.

Solche Gummi-Metall-Lager und/oder Kunststoffteile, insbesondere Faserverbundteile sind bekanntlich bei richtiger Auslegung über eine lange Nutzungsdauer auch bei hohen oszillierenden Belastungen funktionssicher und im Prinzip verschleißfrei. Ein Kriterium für die Funktion eines solchen Bauteils ist die Verformung unter Krafteinwirkung bzw. die entsprechende Bauteilsteifigkeit.

An Muster-Bauteilen und an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden Kraft und Verformung gemessen, wobei einer der beiden Werte vorgegeben wird. Daraus wird ein Diagramm als Messkurve erzeugt, in dem eine abfallende Steifigkeit über die Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Stufen erkennbar. In der ersten Stufe fällt die Steifigkeit sehr schnell, beispielsweise um zirka 30% ab, was als Fließen und Setzen bezeichnet wird. Anschließend wird über eine vergleichsweise sehr lange Nutzungsdauer nur ein sehr geringer Abfall der Steifigkeit gemessen entsprechend einem Plateauverlauf mit linearem und/oder leichtem Abfall der Steifigkeit. Daran schließt sich ein messbarer vergleichsweise zügiger progressiver Abfall der Steifigkeit an, welcher das nahe Ende der Bauteilfunktion mit einem möglichen Ausfall und damit das Ende der Nutzungsdauer markiert.

Der Grund für dieses messbare Verhalten insbesondere eines Gummi-Metall-Lagers liegt darin, dass bei dauernden hohen oszillierenden Belastungen durch anliegende Kräftemomente oder durch aufgezwungene Verformungen Molekülketten aufreißen, die sich dann wegen der anliegenden Wechsellasten nicht mehr regenerieren können. Insbesondere in der dritten Stufe potenzieren sich diese Vorgänge und es kommt auch zu optisch erkennbaren Rissen und Schäden, die mit einem schnellen Abfall der Bauteilsteifigkeit zu einem beginnenden Ende der Nutzungsfunktion und letztendlich zu einem Ausfall führen. Ausgehend von Messungen der Nutzungsdauer auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Übliche typische Nutzungsdauern entsprechend der ersten und zweiten Stufe des oben genannten Diagramms liegen in der Größenordnung von 6 bis 10 Jahren. Wenn die dritte Diagrammstufe erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich den vorstehend in Verbindung mit einem Gummi-Metall-Lager erläuterten Steifigkeitsverlauf verhält sich bei entsprechenden Belastungen üblicherweise auch ein Kunststoffteil, insbesondere ein Faserverbundbauteil, bei dem sich durch oszillierende Belastungen und erzwungene Verformungen der Faserverbund lockert und auflöst.

Bei vielen Anwendungen solcher Bauteile kann das beginnende Ende der Nutzungsdauer entsprechend der dritten Diagrammstufe relativ einfach erkannt werden, beispielsweise durch eine veränderte Geräuschentwicklung oder bei einem Straßenfahrzeug durch ein verändertes Fahrverhalten. Bei leicht zugänglichen Einbausituationen kann eine beginnende Schädigung entsprechend der dritten Diagrammstufe gegebenenfalls auch optisch erkannt werden. Bei vielen Einbausituationen in Schienenfahrzeugen sind solche einfachen Kontrollen nicht möglich, so dass ein Bauteilschaden zu einem Sicherheitsrisiko und/oder zu teuren Folgeschäden und Betriebsausfällen führen kann.

Gerade dafür werden bisher relevante Bauteile nach Möglichkeit im Vorfeld getestet und mit gemessenen Belastungsdaten eine maximale Laufzeit festgelegt, nach der sie unter Berücksichtigung einer normalen Streuung und mit Sicherheitsabschlägen meist lange vor einer möglichen Lebensdauer getauscht werden, lange bevor eine Schädigung weit fortgeschritten ist.

Nachteilig muss für einen solchen präventiven Tausch eines Bauteils in regelmäßigen Wartungsintervallen das Schienenfahrzeug außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil- und Wartungskosten, die noch nicht durch den aktuellen und noch funktionssicheren Bauteilzustand erforderlich wären. Da in einem Schienenfahrzeug regelmäßig mehrere solcher Bauteile, beispielsweise Gummi-Metall-Lager verbaut sind, vervielfachen sich die Kosten entsprechend.

Aufgabe der Erfindung ist es, bei einem Schienenfahrzeug mit wenigstens einem elastisch verformbaren Bauteil als Strukturteil und/oder Lagerteil die mögliche Bauteilnutzungsdauer genauer festzustellen, als dies durch Prüfstandsmessungen und Abschätzungen möglich ist. Eine weitere Aufgabe der Erfindung ist es, ein Verfahren zur Bestimmung des Beginns einer verschleißbedingten Restnutzungsdauer eines elastisch verformbaren Bauteils vorzuschlagen.

Die Aufgaben werden mit den Merkmalen der unabhängigen Patentansprüche gelöst. Vorteilhafte Ausgestaltungen sind Gegenstand der darauf rückbezogenen Unteransprüche.

Gemäß Anspruch 1 wird bei einem Schienenfahrzeug ein sich zeitversetzt wiederholender, jeweils gleicher Fahrzustand vorbestimmt, dem eine bestimmte, jeweils gleiche Verformungskraft zugeordnet ist. Ein solcher Fahrzustand wird jeweils beim Auftreten mit einer Erfassungseinheit erkennbar und erfassbar. Vorzugsweise wird ein Fahrzustand ausgewählt und bestimmt, der relativ häufig mit einer deutlich messbaren Bauteilverformung auftritt, so dass eine relativ große Anzahl von auswertbaren Messergebnissen gewonnen werden kann. Vorzugsweise sollen beim ausgewählten Fahrzustand Lastniveaus mit relativ hohem Schädigungsanteil, insbesondere andauernde, hohe oszillierende Belastungen am Bauteil auftreten. Dabei wird davon ausgegangen, dass bei weitgehend gleichen Fahrzuständen und entsprechend gleichen Betriebszuständen des Schienenfahrzeugs die dadurch am Bauteil auftretenden Verformungskräfte ebenfalls weitgehend gleich sind. Grundsätzlich können auch mehrere unterschiedliche Fahrzustände für mehrere parallele Auswertungen oder für Auswertungen an mehreren im Schienenfahrzeug verbauten Bauteilen vorbestimmt werden.

Wenn ein solcher vorbestimmter Fahrzustand erkannt und erfasst wird, erfolgt durch ein Startsignal die Auslösung eines Messvorgangs, wobei für eine Bauteilüberwachung mit wenigstens einem bauteilzugeordneten Sensor und einer nachgeschalteten Mess- und Auswerteeinheit eine Bauteilverformung als Kenngröße für eine aktuelle Bauteilsteifigkeit gemessen und der Messwert gespeichert wird. Die auf das Bauteil einwirkende Verformungskraft muss hier vorteilhaft nicht absolut gemessen werden. Ebensowenig ist es erforderlich, die Bauteilverformung bzw. deren Kehrwert als Bauteilsteifigkeit absolut zu messen, da bei der weiteren Auswertung nur Relativwerte und tendenzielle Verläufe zwischen aufeinanderfolgenden Messwerten herangezogen werden. Eine Messkurve aus den Messwerten soll zum Ausgleich von Messtoleranzen gemittelt und geglättet werden.

Mit einer Vergleichereinheit der Mess- und Auswerteeinheit wird ein Vergleich eines aktuellen Verformungsmesswerts bezüglich vorhergehender gespeicherter Verformungsmesswerte durchgeführt, wobei sich zwei unterschiedliche Ergebnisse zeigen können:

Die über eine relativ lange Nutzungsdauer gespeicherten Verformungsmesswerte bzw. entsprechende Kenngrößen für die Bauteilsteifigkeit sind etwa gleich. Bei der Erstellung einer Messkurve, die zum Ausgleich von Messtoleranzen gemittelt und geglättet wird, ergibt sich ein Plateaubereich mit im Verlauf der langen Nutzungsdauer von üblicherweise mehreren Jahren nur relativ geringem Neigungsanstieg für die Bauteilverformung bzw. Neigungsabfall für die Bauteilsteifigkeit. Bei so einem Vergleichsergebnis ist eine weitere sichere Bauteilfunktion festgestellt. Dieser Plateaubereich entspricht der eingangs erwähnten zweiten Stufe des dort erwähnten Steifigkeitsdiagramms.

Wenn aber über eine gegenüber der Nutzungsdauer des Plateaubereichs relativ kurze Nutzungsdauer von üblicherweise wenigen Tagen/Wochen nacheinander erfasste Verformungsmesswerte sukzessiv und progressiv größer werden, ist der unkritische Plateaubereich deutlich mit einem starken Steigungsanstieg einer Messkurve bezüglich der Bauteilverformung bzw. einem starken Neigungsabfall einer Messkurve bezüglich der Bauteilsteifigkeit verlassen. Wenn ein solcher als Schwellwert vorgebbarer Steigungsanstieg bzw. Neigungsabfall festgestellt wird, ist damit der Beginn einer verschleißbedingten vorgebbaren Bauteil-Restnutzungsdauer festgestellt. Zudem wird eine entsprechende Warninformation, beispielsweise als optisches oder akustisches Signal ausgegeben, die auf einen erforderlichen Bauteilaustausch hinweist. Dieses zweite Ergebnis liegt vor, wenn die dritte Stufe im eingangs beschriebenen Steifigkeitsdiagramm erreicht ist.

Wenn zu Beginn einer Bauteilnutzung über einen gegenüber der Nutzungsdauer des Plateaubereichs relativ kurzen Zeitabstand ein steiler Bereich der Messkurve festgestellt wird, entspricht dies der ersten Stufe im vorstehend erläuterten Steifigkeitsdiagramm. Diese nachlassende Steifigkeit durch Fließen und Setzen zu Beginn der Nutzung ist unkritisch, die entsprechenden Messwerte werden bei der Bewertung für einen Beginn einer Restnutzungsdauer herausgenommen und nicht verwertet.

Kern der Erfindung ist somit eine qualitative Bestimmung der Steifigkeit eines verformbaren Bauteils, die im verbauten Zustand im Schienenfahrzeug nicht unmittelbar kontrollierbar und messbar ist. Nur in Kenntnis einer Kraft und Verformung, wie beispielsweise auf einem Prüfstand, lässt sich die Steifigkeit absolut bestimmen. In einer technischen Anwendung ist es mit vertretbaren Aufwand nicht möglich, die an einem verbauten Bauteil anliegende Kraft zu messen. Wege oder Verformungen hingegen sind relativ einfach in an sich bekannter Weise zu messen. Die Bestimmung der Bauteillebensdauer wird erfindungsgemäß vorteilhaft nur durch einfach durchzuführende Auswertungen von Messwertveränderungen durchgeführt.

Zu unterschiedlichen Zeitpunkten wird dazu jeweils eine Messung der Bauteilverformung ausgelöst. Der Zeitpunkt entsprechend dem Auftreten eines vorbestimmten Fahrzustands wird so ausgewählt, dass Lastniveaus mit deutlich messbaren Verformungen und bevorzugt mit hohem Schädigungsanteil auftreten. Vorzugsweise wird dabei der Schädigungsanteil durch ein häufiges Auftreten dieses Lastniveaus erreicht und nicht durch hohe Lasten mit geringer Häufigkeit, um eine große Anzahl an Messergebnissen zu gewinnen, deren zwangsläufig auftretende Streuungen somit besser als Streuung und nicht als sich abzeichnender Bauteilschaden bewertbar ist.

Zur Erstellung einer Messkurve werden zweckmäßig auf der X-Achse eines Diagramms die Anzahl der erhaltenen Messwerte aufgetragen, die als Nutzungsdauer interpretierbar sind. Auf der Y-Achse kann die Verformung aufgetragen werden. Optisch verständlicher ist es jedoch deren Kehrwert, eins durch die Verformung, aufzutragen, womit eine Messkurve analog zum Verlauf der Steifigkeit erhalten wird. Damit zeigt sich in einer ersten Stufe zu Beginn der Bauteilnutzungsdauer ein starker Steifigkeitsabfall durch Fließen und Setzen, dem sich in einer zweiten Stufe ein Plateaubereich mit leicht linear abfallender Steifigkeit über die Lebensdauer anschließt, sowie am Ende der Nutzungsdauer in einer dritten Stufe ein stark progressiver Abfall. Für die Auswertung wird als Messkurve eine Gerade ermittelt, die das beschriebene Plateau in ihrem Verlauf gut abbildet, wobei dies bereits nach wenigen Messwerten im Plateaubereich möglich ist. Jeder weitere Messwert wird dahingehend bewertet, wie er die Charakteristik der zuvor ermittelten Geraden verändert oder davon abweicht. Vorzugsweise wird für eine Auswertung eine Veränderung der Steigung diese Gerade als Kriterium herangezogen. Nimmt nach dem Plateaubereich der Betrag der Steigung über mehrere Messwerte deutlich über den Wert der Streuung zu, so beginnt der Bereich des progressiven Steifigkeitsabfalls als Signal zum Austausch des Bauteils. Im Prinzip wird somit das Differenzial der gemittelten Messkurve ausgewertet.

Erfindungsgemäß wird somit vorteilhaft der Verschleißzustand eines verformbaren Bauteils während seiner Bauteilnutzungsdauer unmittelbar und direkt festgestellt. Damit kann ein Bauteil über seine tatsächliche Lebensdauer bis zum Beginn seines progressiven Steifigkeitsabfalls genutzt werden. Insbesondere können damit durch Nutzungsdauerschätzungen vorgegebene, präventive Austauschmaßnahmen vor dem tatsächlich möglichen Nutzungsende entfallen, wodurch Wartungs- und Betriebskosten eingespart werden. Zudem ist die Bauteilsicherheit durch die Messung am Bauteil erhöht und das Risiko eventueller Folgekosten bei einem nicht erkannten Bauteilausfall ist reduziert.

Als vorbestimmter Fahrzustand des Schienenfahrzeugs, vorzugsweise eines Zugs wird ein jeweils gleicher, in einem vorbestimmten Streckenabschnitt als Messabschnitt auftretender Fahrzustand festgelegt, wobei davon auszugehen ist, dass dann jeweils gleiche Lager- und Strukturteilbelastungen auftreten. Vorteilhaft wird dazu ein Kurven-Streckenabschnitt ausgewählt, bei dem durch Zentripetal- und Kippkräfte deutlich messbare und gut verwertbare Bauteilverformungen auftreten.

Ein selbsttätiger Start eines Messvorgangs soll durch einem Impuls beim Erreichen des Streckenabschnitts ausgelöst werden. Ein solcher Streckenimpuls kann streckenabhängig ohnehin im Schienenfahrzeug über eine Streckenerfassung (zum Beispiel Tages-km-Zähler) und/oder einfach durch ein GPS-Signal generiert werden.

Grundsätzlich kann damit eine zugeordnete einzige Messung gestartet, durchgeführt und der Messwert verwertet werden. Da die Bauteilbelastungen beim Durchfahren des Streckenabschnitts, insbesondere eines Kurven-Streckenabschnitts länger andauern, können in einem vorbestimmten Zeitabschnitt und/oder bis zu einem vorbestimmten und mit einem weiteren Impuls markierten Ende eines Streckenabschnitts mehrere aufeinanderfolgende Bauteilverformungen gemessen und die erhaltenen Messwerte gemittelt werden, um Messtoleranzen zu reduzieren. Ein solcher gemittelter Messwert soll dann dem aktuell gefahrenen Streckenabschnitt zugeordnet und in die Messkurve eingetragen werden, wobei die Anzahl der relevanten, in der Messkurve eingetragenen Fahrten als Bauteilnutzungsdauer interpretiert wird.

Bei jedem Auftreten eines vorbestimmten Betriebszustands kann jeweils ein einziger Messvorgang gestartet und durchgeführt werden. Alternativ und/oder zusätzlich kann bei einem langen Anhalten eines solchen Betriebszustands auch nach einer vorbestimmten Wartezeit jeweils selbsttätig wieder ein weiterer Messvorgang gestartet und durchgeführt werden.

Besonders geeignet für die erfindungsgemäße Überwachung sind die eingangs erwähnten elastisch verformbaren Bauteile eines Schienenfahrzeugs als Gummi-Metalllager und als Strukturteile.

Da eine Bauteilverformung auch temperaturabhängig ist, soll als weitere Bedingung für den Start eines Messvorgangs und/oder für die Verwertung eines Messwerts ein Temperaturfenster von 6°C eingehalten werden, wobei dieses Temperaturfenster in einem Temperaturbereich von 0°C bis 35°C wählbar ist. Dabei wird berücksichtigt, dass Temperatureinflüsse bei Temperaturen unter 0°C und über 35°C zu starken, ungünstigen Messwertschwankungen führen. Der Temperatureinfluss auf die Messwerte in einem Temperaturfenster von 6°C innerhalb des Temperaturbereichs von 0°C bis 35°C ist dagegen für die erfindungsgemäße Auswertung vernachlässigbar.

Sollte ein Messvorgang wegen festgestellter ungünstiger Temperaturen nicht erfolgen oder durchgeführt und/oder nicht verwertet werden, jedoch die übrigen Startbedingungen insbesondere der vorbestimmte Betriebszustand erfüllt sein, wird ein Messwertzähler entsprechend einer Nutzungsdauer dennoch hoch gesetzt, um die Messkurve, insbesondere den Steifigkeitsverlauf nicht zu verzerren.

Ab dem Beginn des progressiven Steifigkeitsabfalls kann regelmäßig eine Weiterbenutzungsdauer als Restlebensdauer des Bauteils von 10% der bisherigen Bauteilnutzungsdauer angenommen werden. Diese Information kann zusätzlich zum Signal für den Austausch des Bauteils gegeben werden.

Konkret kann als Sensor zur Messung der Bauteilverformung eine Sensorik zur Messung einer Verschiebung und/oder einer Geschwindigkeit und/oder einer Beschleunigung verwendet werden. Eine Verformung kann dabei zwischen Bauteilkomponenten und/oder Anbauteilen direkt oder indirekt gemessen werden. Dabei kann die Sensorik in das verformbare Bauteil, insbesondere in ein Elastomer integriert sein und/oder an angrenzenden/benachbarten Anbauteilen angeordnet sein. Beispielsweise kann ein Abstand als Bauteilverformung direkt gemessen werden, indem auf der Innenseite eines Gummi-Metall-Lagers ein Signalgeber sitzt und auf der Außenseite ein Aufnehmer. Es ist auch möglich, bei den Elementen die Beschleunigungen zu messen, zweimal zu integrieren und zu addieren, so dass der Relativweg erhalten wird. Je nach den Gegebenheiten können an sich bekannte einfache induktive Wegaufnehmer, magnetoresistive Sensoren, Hallsonden, Beschleunigungssensoren oder andere Sensoren verwendet werden, mit der eine Verschiebung, eine Geschwindigkeit, eine Beschleunigung oder ein anderes verschiebungsäquivalentes Signal gemessen werden kann.

Zweckmäßig werden die Erfassungseinheit und die Mess- und Auswerteeinheit mit ihren Komponenten in eine meist in einem Schienenfahrzeug, beispielsweise in einer Lokomotive vorhandene Zentralelektronik voll- oder teilintegriert, wobei gegebenenfalls auch ohnehin für andere Zwecke vorhandene Messwerte, beispielsweise Geschwindigkeitsmesswerte mitverwertet werden können.

Zusammenfassend zeigen sich die Vorteile der Erfindung insbesondere bei einem schienengebundenen Zug, wo regelmäßig viele zur Überwachung geeignete Gummi-Metall-Lager verbaut sind, wie Lagerteile in einer Lokomotive oder in Wagons, Lagerteile in einem Drehgestell als Wankstützen und/oder Lenkerlager und/oder Primär- und Sekundärfedern. Als vorbestimmter Betriebszustand wird hier einfach ein Fahrzustand in einem bestimmten Streckenabschnitt vorgegeben, wobei davon ausgegangen wird, dass üblicher Weise ein Zug im Bahnbetrieb stets auf derselben Strecke verkehrt und dass in einem bestimmten Streckenabschnitt insbesondere bei einer Kurvenfahrt bei gleichen Geschwindigkeiten weitgehend gleiche Lagerbelastungen auftreten. Beim Erreichen des vorgegebenen Streckenabschnitts kann dann einfach durch ein GPS-Signal bei vorgegebener Fahrgeschwindigkeit und beim Vorliegen eines geeigneten Temperaturfensters ein Messvorgang gestartet werden.

Die Aufgabe der Erfindung wird hinsichtlich des Verfahrens mit den Merkmalen des Anspruchs 11 gelöst.

Anhand einer Zeichnung wird die Erfindung weiter erläutert.

Es zeigen:
- Fig. 1: eine schematische Darstellung eines Schienenfahrzeugs als Hochgeschwindigkeits-Personenzugs (ICE) mit Komponenten zur Erzeugung eines Startimpulses für einen Messvorgang,
- Fig. 2: ein Ablaufdiagramm für die erfindungsgemäße Bestimmung des Beginns einer verschleißbedingten Restnutzungsdauer, und
- Fig. 3: ein typisches Diagramm einer Messkurve.

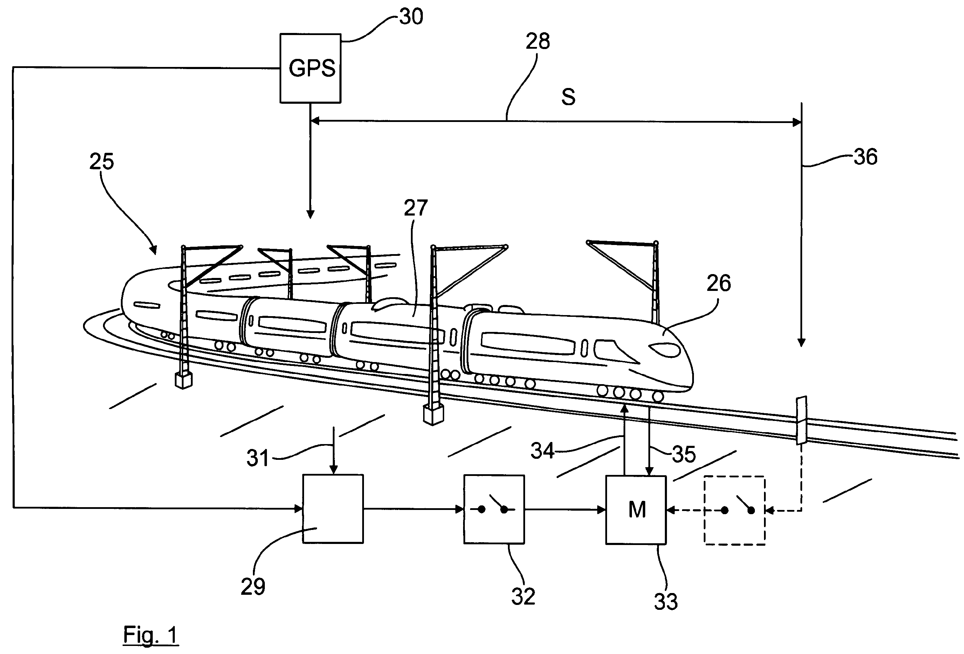

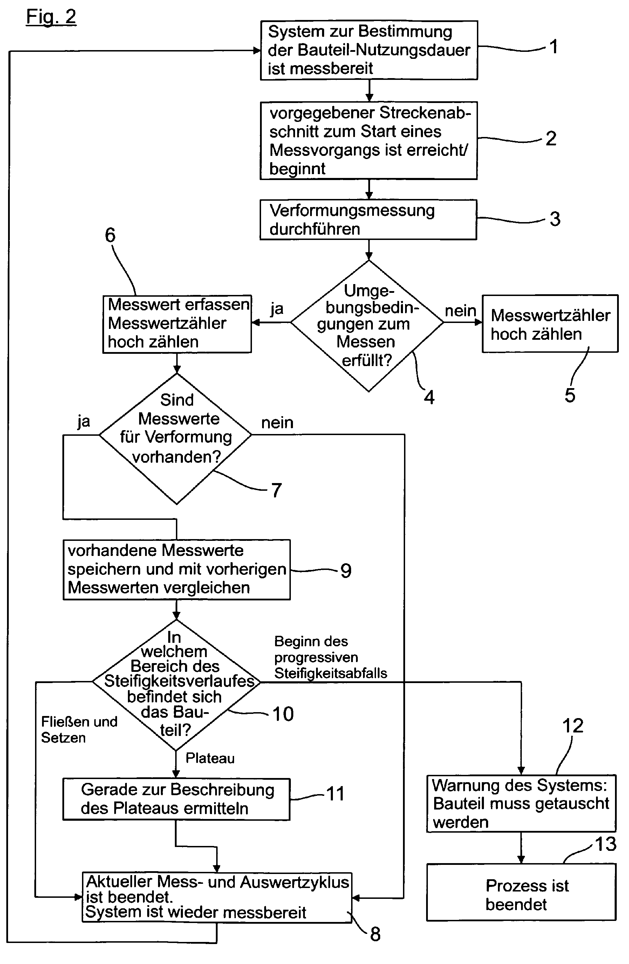

In Fig. 1 ist schematisch ein Schienenfahrzeug 25 als Hochgeschwindigkeits-Personenzug (ICE) mit einer Lokomotive 26 und Waggons 27 bei einer Kurvenfahrt in einem Streckenabschnitt 28 der Länge s dargestellt. Ein Messvorgang, hier beispielsweise mit mehreren aufeinanderfolgenden Einzelmessungen über die Länge s des Streckenabschnitts 28 an einem elastisch verformbaren Gummi-Metalllager eines vorderen Drehgestells der Lokomotive 26 läuft bereits. Das vorausgegangene Erreichen und die Einfahrt in den Streckenabschnitt 28 wurde von einer Erfassungseinheit 29 mittels eines GPS-Signals festgestellt, das von einem GPS-Gerät 30 abgegeben worden war. Weiter wurde als weitere Startbedingung für den Messvorgang eine geeignete vorgegebene Umgebungstemperatur festgestellt (schematisch mit Pfeil 31), worauf mit einer Schalteinheit 32 ein Triggerimpuls zum Start der Verformungsmessung durch die Mess- und Auswerteeinheit 33 abgegeben worden war (Steuerleitung 34). Erfasste Messwerte unter den Belastungsbedingungen der aktuellen Kurvenfahrt werden über die Messleitung 35 der Mess- und Auswerteeinheit 33 zugeführt und gemittelt entsprechend dem Ablaufdiagramm nach Fig. 2 vorarbeitet, wobei der Messvorgang durch einen weiteren Impuls am Streckenende 36 des Streckenabschnitts 28 beendet wird.

In Fig. 2 ist die Prozessabfolge anhand von Status/Prozess-Rechtecken und Entscheidungsrauten dargestellt:

Gemäß dem ersten Rechteck 1 ist das System zur Bestimmung der Bauteilnutzungsdauer messbereit. Als Bauteil wird hier beispielhaft ein Gummi-Metall-Lager des Schienenfahrzeugs in einem verbauten Zustand angenommen.

Gemäß der beiden nachfolgenden Rechtecke 2 und 3 wird ein vorgegebener Betriebszustand zum Start eines Messvorgangs erreicht, worauf der Befehl zur Durchführung einer Verformungsmessung gegeben wird.

Ein solches Triggersignal für einen Messstart wird beim Einsatz des Gummi-Metall-Lagers im Bahnbetrieb (Lokomotive/Wagon) durch Erreichen eines Messabschnitts mittels eines Positionssignals ausgegeben werden.

In der Entscheidungsraute 4 wird zudem überprüft, ob eine vorgegebene Fahrgeschwindigkeit und ein vorgegebenes Temperaturfester bei der Messung erfüllt sind. Je nach den speziellen Gegebenheiten können auch weitere Randbedingungen als Start- oder Verwertungsbedingungen vorgegeben werden.

Sind die Umgebungsbedingungen/Randbedingungen zum Messen nicht erfüllt, wird der Messwertzähler dennoch hochgezählt, um dadurch sonst gegebene Verzerrungen der Messkurve weitgehend zu reduzieren (Rechteck 5).

Sind die Umgebungsbedingungen/Randbedingungen zum Messen erfüllt, wird ein Messwert erfasst und der Messwertzähler hochgezählt (Rechteck 6).

In der folgenden Entscheidungsraute 7 wird festgestellt, ob Werte für die Verformung vorhanden sind, ist dies nicht der Fall, wird der aktuelle Mess- und Auswertezyklus beendet.

Sind Messwerte vorhanden, werden diese gespeichert und mit vorhergehenden Messwerten verglichen (Rechteck 9).

Anschließend wird dieser Vergleich ausgewertet (Entscheidungsraute 10) und festgestellt in welchem Bereich des Steifigkeitsverlaufs sich das Bauteil befindet. Ein typischer Steifigkeitsverlauf ist nachfolgend anhand des Diagramms der Fig. 2 dargestellt und erläutert.

Wenn der erste Bereich 16 mit relativ schnell abfallender Steifigkeit zum Nutzungsbeginn, der durch Fließen und Setzen des Elastomermaterials hervorgerufen wird, festgestellt wird, ist dies kein Hinweis auf den Beginn eines baldigen Nutzungsendes, so dass der aktuelle Mess- und Auswertezyklus beendet wird (Rechteck 8).

Wird ein Steifigkeitsverlauf dergestalt ermittelt, dass der zweite Bereich 17 als Plateaubereich durch die aktuelle Messung weitergeführt ist, wird die Gerade zur Beschreibung des Plateaubereichs weitergeführt (Rechteck 11). Auch dies ist kein Hinweis auf den Beginn eines Nutzungsendes, so dass auch für diesen Fall der aktuelle Mess- und Auswertezyklus beendet wird (Rechteck 8).

Wird dagegen anschließend an einen Plateaubereich in einem dritten Bereich 19 des Steifigkeitsverlaufs ein progressiver Steifigkeitsabfall bei der Auswertung festgestellt, gibt das System eine Warnung aus, dass das überwachte Bauteil getauscht werden muss (Rechteck 12). Mit dieser Warnung bezüglich des überwachten Bauteils wird der Prozess beendet (Rechteck 13).

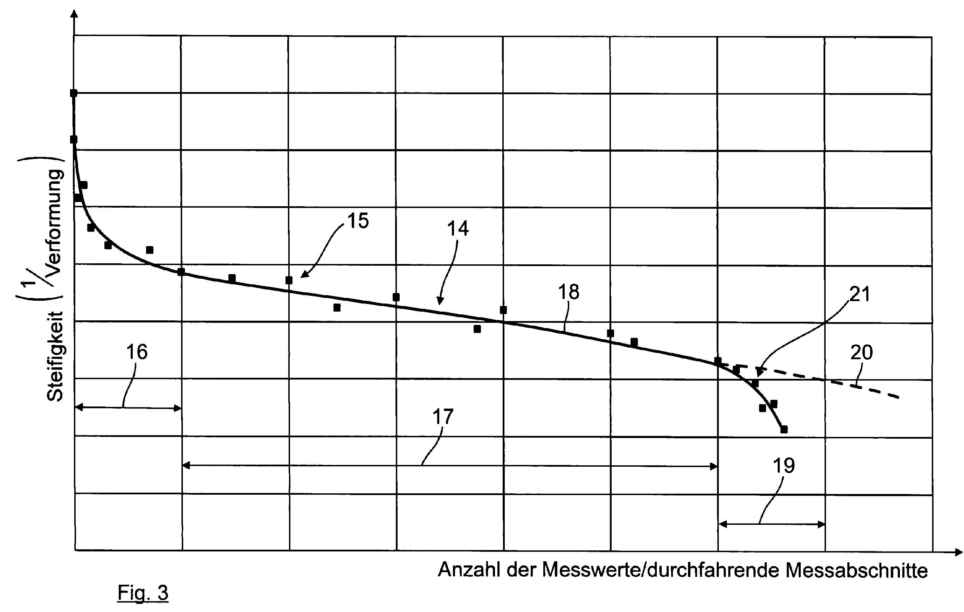

In Fig. 3 ist in einem Diagramm eine typische Messkurve 14 für eine Bauteilnutzung eines elastisch verformbaren Bauteils, hier beispielhaft ein Gummi-Metall-Lager des Schienenfahrzeugs bei aufeinanderfolgenden innerhalb geringer Grenzen gleichen und zeitlich versetzt auftretenden Belastungen dargestellt.

Dazu ist nach oben auf der Y-Achse die jeweils ermittelte Kenngröße für die Steifigkeit als 1 geteilt durch Verformung aufgetragen. Auf der X-Achse des Diagramms ist die Anzahl der Messwerte bzw. die Anzahl der durchfahrenden Messabschnitte aufgetragen, die als Nutzungsdauer interpretierbar ist, wobei mit gleichen Abständen für jede Fahrt ein dazu vorhandener Messwert im Diagramm als Messpunkt 15 eingezeichnet ist.

Durch nicht genau exakt erfassbare Fahrbedingungen und Messtoleranzen streuen ersichtlich die Messpunkte 15 jedoch in nur geringem und für die zu treffende Aussage bezüglich der Nutzungsdauer unbedeutendem Umfang. Bei der Auswertung wird daher eine Interpolation vorgenommen mit folgendem Ergebnis:

Im ersten Steifigkeitsbereich 16 fällt die Steifigkeit durch Fließen und Setzen relativ schnell ab. Im zweiten Steifigkeitsbereich 17, der durch eine Gerade 18 durch Ausmittelung der Messwertstreuung angegeben werden kann, ist ein Plateaubereich durch einen nur sehr geringen Steifigkeitsabfall gekennzeichnet. Im Diagramm ist dieser Steifigkeitsbereich zur besseren Verdeutlichung mit einer relativ großen Neigung der Geraden 18 dargestellt. Zudem ist tatsächlich der zweite Steifigkeitsbereich 17 als Plateaubereich im Vergleich zum ersten und dritten Steifigkeitsbereich 16, 19 wesentlich größer/länger mit vielen Messwerten 15 und hier zur besseren Verdeutlichung des prinzipiellen Verlaufs der Messkurve verkürzt dargestellt. Anschließend an den Plateaubereich 17 wird im dritten Steifigkeitsbereich 19 ein schneller progressiver Steifigkeitsabfall festgestellt als Hinweis für einen bald erforderlichen Austausch des Bauteils entsprechend dem Rechteck 12 aus Fig. 1. Dieser progressive Steifigkeitsabfall als deutliche Abweichung von der Verlängerung 20 der Geraden 18 ist bereits kurz nach seinem Beginn (beispielsweise mit Messwert 21) schnell und einfach feststellbar.

## Patentansprüche

1. Schienenfahrzeug mit wenigstens einem elastisch verformbaren Bauteil als Strukturteil und/oder Lagerteil, auf das im Betriebsverlauf von wechselnden Fahrzuständen abhängige, unterschiedliche Verformungskräfte einwirken, die zu einem die Bauteilnutzungsdauer begrenzenden Bauteilverschleiß führen,
**dadurch gekennzeichnet,**
**dass** ein sich zeitversetzt wiederholender, jeweils gleicher Fahrzustand vorbestimmt wird, dem eine bestimmte, jeweils gleiche Verformungskraft zugeordnet ist, und ein solcher Betriebszustand mit einer Erfassungseinheit erkennbar und erfassbar ist,
**dass** bei Erkennung und Erfassung eines solchen vorbestimmten Fahrzustands (2) selbsttätig ein Messvorgang durch ein Startsignal gestartet und durchgeführt wird (3), wobei für eine Bauteilüberwachung mit wenigstens einem bauteilzugeordneten Sensor und einer nachgeschalteten Mess- und Auswerteeinheit eine Bauteilverformung als Kenngröße für eine aktuelle Bauteilsteifigkeit gemessen und der Messwert gespeichert wird,
**dass** mit einer Vergleichereinheit der Mess- und Auswerteeinheit ein Vergleich eines aktuellen Verformungsmesswerts bezüglich vorhergehender, gespeicherter Verformungsmesswerte durchgeführt wird (9) mit dem Ergebnis,
**dass** die über eine relativ lange Nutzungsdauer gespeicherten Verformungsmesswerte, bzw. entsprechende Kenngrößen für die Bauteilsteifigkeit etwa gleich sind und eine aus den Messwerten gebildete Messkurve (14) einen Plateaubereich (17) mit im Verlauf dieser Nutzungsdauer geringem Neigungsanstieg für die Bauteilverformung bzw. geringem Neigungsabfall für die Bauteilsteifigkeit bildet, womit eine weitere sichere Bauteilfunktion festgestellt ist, oder
**dass** alternativ über eine gegenüber der Nutzungsdauer des Plateaubereichs kurze Nutzungsdauer nacheinander erfasste Verformungsmesswerte sukzessiv und progressiv größer werden, so dass der Plateaubereich mit einem gegenüber dem Plateaubereich stärkeren Steigungsanstieg einer Messkurve bezüglich der Bauteilverformung bzw. einem gegenüber der Neigung des Plateaubereichs stärkeren Neigungsabfall einer Messkurve (14) bezüglich der Bauteilsteifigkeit verlassen ist (19), wodurch der Beginn einer verschleißbedingen vorgebbaren Bauteil-Restnutzungsdauer festgestellt und eine entsprechende Warninformation ausgegeben wird (12), insbesondere beim Erreichen eines als Schwellwert vorgegebenen Steigungsanstiegs bzw. Neigungsabfalls der Messkurve (14).

2. Schienenfahrzeug nach Anspruch 1, **dadurch gekennzeichnet, dass** ein zu Beginn einer Bauteilnutzung erfasster ansteigender oder abfallender Bereich (16) der Messkurve (14), bei der Auswertung für den Beginn einer Restnutzungsdauer nicht herangezogen wird.

3. Schienenfahrzeug nach Anspruch 1 oder 2, **dadurch gekennzeichnet,**
**dass** der vorbestimmte Fahrzustand ein Fahrzustand in einem vorbestimmten, regelmäßig befahrenen Streckenabschnitt als Messabschnitt ist,
**dass** ein selbsttätiger Start eines Messvorgangs durch einen Impuls beim Erreichen dieses Streckenabschnitts ausgelöst und gegebenenfalls der Messvorgang durch einen Impuls am Ende des Streckenabschnitts beendet wird.

4. Schienenfahrzeug nach einem der Ansprüche 1 bis 3, **dadurch gekennzeichnet,**
**dass** im Streckenabschnitt in einem Messvorgang mehrere Messwerte nacheinander aufgenommen werden und als verwerteter Messwert ein gemittelter Wert in der Messkurve erfasst wird, und
**dass** solche verwerteten Messwerte als gemittelte Verformungsmesswerte oder Steifigkeitsmesswerte über die Anzahl der Fahrten im vorbestimmten Streckenabschnitt als Bauteilnutzungsdauer aufgetragen werden.

5. Schienenfahrzeug nach einem der Ansprüche 2 bis 4, **dadurch gekennzeichnet, dass** das Erreichen und/oder das Ende des vorbestimmten Streckenabschnitts durch einen Impuls als GPS-Signal (Global-Positioning-System-Signal) signalisiert wird.

6. Schienenfahrzeug nach einem der Ansprüche 1 bis 5, **dadurch gekennzeichnet,**
**dass** ein überwachtes elastisches Bauteil ein Lagerteil einer Lokomotive oder eines Waggons ist, insbesondere ein Lagerteil in einem Drehgestell als Wankstütze und/oder Lenkerlager und/oder Primär- und Sekundärfeder.

7. Schienenfahrzeug nach einem der Ansprüche 2 bis 6, **dadurch gekennzeichnet, dass** die Fahrgeschwindigkeit des Schienenfahrzeugs im Streckenabschnitt erfasst wird und der Start eines Messvorgangs und/oder die Erfassung eines Messwerts in der Messkurve nur freigegeben wird, wenn die Fahrgeschwindigkeit in einem vorgebbaren Geschwindigkeitsfenster liegt, und
dass beim Vorliegen der übrigen Startbedingungen ein Zähler für die Anzahl der Streckenabschnittfahrten dennoch hochgesetzt wird, wenn nur die Geschwindigkeitsbedingung und gegebenenfalls weitere vorgebbare Randbedingungen zur Freigabe nicht erfüllt sind.

8. Schienenfahrzeug nach einem der Ansprüche 1 bis 7, **dadurch gekennzeichnet,**
**dass** die Umgebungstemperatur um das Bauteil mit einer Temperaturmesseinheit erfasst wird und der Start eines Messvorgangs und/oder die Verwertung eines Messwerts nur freigegeben wird (4), wenn die Umgebungstemperatur für jeden Messvorgang in einem vorgebbaren jeweils gleichen Temperaturfenster, vorzugsweise in einem Temperaturbereich von 6°C liegt, wobei das Temperaturfenster in einem Temperaturbereich von 0°C bis 35°C wählbar ist, und
**dass** beim Vorliegen der übrigen Startbedingungen ein Messwertzähler dennoch hochgesetzt (5) wird, wenn nur die Temperaturbedingung und gegebenenfalls weitere vorgebbare Randbedingungen zur Freigabe nicht erfüllt sind.

9. Schienenfahrzeug nach einem der Ansprüche 1 bis 8, **dadurch gekennzeichnet, dass** die bisherige Bauteilnutzungsdauer bis zur Abgabe einer Warninformation erfasst wird und mit der Warninformation eine Information zur möglichen unkritischen Weiterbenutzung bzw. bis zu einem zwingend erforderlichen Bauteilaustausch mit einer Weiterbenutzungsdauer als Restlebensdauer von 10% der bisherigen Bauteilnutzungsdauer gegeben wird.

10. Gerät nach einem der Ansprüche 1 bis 9, **dadurch gekennzeichnet,**
**dass** als Sensor zur Messung der Bauteilverformung eine Sensorik zur Messung einer Verschiebung und/oder einer Geschwindigkeit und/oder einer Beschleunigung verwendet wird, womit eine Verformung als Verschiebung zwischen Bauteilkomponenten und/oder Anbauteilen direkt oder indirekt messbar ist, und
**dass** die Sensorik zumindest teilweise in das verformbare Bauteil integriert und/oder an angrenzenden/benachbarten Anbauteilen angeordnet ist.

11. Schienenfahrzeug nach einem der Ansprüche 1 bis 10, **dadurch gekennzeichnet, dass** die Erfassungseinheit und die Mess- und Auswerteeinheit mit ihren Komponenten in eine fahrzeugseitige Zentralelektronik voll- oder teilintegriert sind.

12. Verfahren zur Bestimmung des Beginns einer verschleißbedingten Restnutzungsdauer eines elastisch verformbaren Bauteils als Strukturteil und/oder Lagerteil eines Schienenfahrzeugs, **gekennzeichnet durch** die Merkmale eines der Ansprüche 1 bis 11.
